# EUROPÄISCHE PATENTSCHRIFT

(11) **EP 0 548 519 B1**
(45) Veröffentlichungstag und Bekanntmachung des Hinweises auf die Patenterteilung: **28.02.1996**
(21) Anmeldenummer: 92119063.3
(22) Anmeldetag: 06.11.1992
(51) Int. Cl.: B65G 61/00, B65G 57/26

(54) **Verfahren zum Be- und Entladen von Paletten mit Stapeln von flächigen Produkten nd Vorrichtung zur Durchführung des Verfahrens**
Method for loading and unloading pallets with stacks of flat products and device for carrying out the method
Procédé pour charger et décharger des palettes avec des piles de produits plats et dispositif pour sa mise en oeuvre

(30) Priorität: 20.12.1991 DE 4142162
(43) Veröffentlichungstag der Anmeldung: 30.06.1993
(73) Patentinhaber: Kolbus GmbH & Co. KG, D-32369 Rahden (DE)
(72) Erfinder: Rathert, Horst, W-4950 Minden (DE)

(56) Entgegenhaltungen:
- DE-A- 3 720 933
- DE-A- 3 813 729

## Beschreibung

Die Erfindung bezieht sich auf ein Verfahren zum fortlaufenden lagenweisen Be- und Entladen von Paletten mit Stapeln von flächigen Produkten wie Falzbogen, Zeitschriften, Bücher, Broschuren, o. dgl. sowie auf eine Vorrichtung zur Durchführung des Verfahrens.

Bei der Herstellung von Büchern, Broschuren, Zeitschriften o. dgl. Produkte besteht vielfach die Notwendigkeit, große Mengen von Druckereierzeugnissen zur Zwischenspeicherung und/oder für den innerbetrieblichen Transport auf Paletten zu stapeln. Während für das Beladen der Paletten Palettiereinrichtungen Verwendung finden, die ein maschinelles Abstapeln ermöglichen, erfolgt das Entladen der einzelnen Stapel von Druckereierzeugnissen grundsätzlich von Hand, was nicht nur außerordentlich arbeitskräfteintensiv ist, sondern auch schwere körperliche Arbeit verlangt. Darüber hinaus lassen sich Verschiebungen der zu Stapeln zusammengefaßten einzelnen Druckereierzeugnisse zueinander, insbesondere beim manuellen Entladen, aber auch beim maschinellen Abstapeln, nicht vermeiden.

Zum Entladen für das Beschicken einer Zusammentragmaschine beispielsweise werden die auf Paletten zwischengespeicherten Stapel von gefalzten Druckbogen mittels eines Hubstaplers vom Zwischenlager zur Anlege- und Beschickungsvorrichtung der Zusammentragmaschine transportiert und die einzelnen Druckbogenstapel dort von der Bedienungsperson manuell angelegt.

Palettiervorrichtungen zum lagenweisen Beladen von Paletten mit Druckereierzeugnissen gehören allgemein zum Stand der Technik. So ist aus der DE-OS 31 07 495 eine nach dem Abschubsystem arbeitende Vorrichtung zum orientierten Ablegen von Stapeln aus bedruckten Zeitungs- oder Buchseiten oder sonstigen Drucksachen auf eine Palette bekannt, mit einer Schiebeplattform, auf die die zusammengestellte Formation von Produkten von einem Querschieber überführt wird. Die Schiebeplattform fährt danach bis über die Palette und nach Absenken eines Abschubelementes hinter die Formation und Absenken der Schiebeplattform auf eine bereits vorhandene Produktlage bewegt sich die Schiebeplattform unter dem feststehenden Abschubelement zum Abstreifen der Formation zurück.

Bei den mit Schiebeplattform und Abschubelement arbeitenden Stapelvorrichtungen ergibt sich durch die Bauhöhe der Plattform ein relativ großer Höhenunterschied zwischen der Auflagefläche der Plattform und der vorhandenen Produktlage auf der Palette. Der hierdurch bedingte relativ große Absetzweg beim Abstreifen der Produkte führt zwangsläufig dazu, daß die auf der Schiebeplattform exakt ausgerichteten Produkte ihre nach einer bestimmten Stapelordnung vorgegebene Formation nach dem Abstreifen verlieren, was in verstärktem Maße bei dünnen Produkten auftritt. Hierbei besteht vor allem die Gefahr, daß sich diese dünnen Produkte übereinanderschieben mit der Folge einer instabilen Stapelung. Ein Ausrichten nach erfolgter Abstapelung ist vielfach nicht durchführbar, beim späteren Entstapeln ergeben sich somit erhebliche Probleme.

Bedingt durch die zwischen den Produkten und den Auflageflächen auftretende Reibung beim Abschub von der Schiebeplattform können diese bekannten Palettiereinrichtungen der Forderung nach einer schonenden Behandlung empfindlicher Produkte wie übereinandergestapelte Bücher oder Broschuren nicht gerecht werden.

Die Aufgabe der Erfindung besteht darin, ein Verfahren der gattungsgemäßen Art sowie eine Einrichtung zur Durchführung des Verfahrens zu schaffen, die sowohl ein vollautomatisches Be- und Entladen von Paletten mit Stapeln von flächigen Produkten wie Falzbogen, Zeitschriften, Bücher, Broschuren o. dgl. ermöglichen und die gewährleisten, daß die Ausrichtung der Produkte innerhalb eines Stapels zueinander sowie die Ausrichtung der zu einer Reihe formierten Stapel exakt beibehalten wird. Darüber hinaus soll eine schonende Behandlung der Produkte beim Be- und Entladen sichergestellt werden.

Diese Aufgabe wird durch die Merkmale des Verfahrensanspruchs 1, sowie des Vorrichtungsanspruchs 7 und 8 und des Produktanspruchs 14 gelöst. Vorteilhafte Verfahrens- sowie Vorrichtungsmerkmale ergeben sich aus den Unteransprüchen.

Bedingt durch die Verwendung von doppelten Zwischenlagen jeweils zwischen zwei Stapellagen werden die Stapelreihen zwischen einer oberen und einer unteren Zwischenlage eingespannt gehalten transportiert, so daß eine Positionsänderung der Stapel sowie ein Verrutschen der Einzelprodukte zueinander sowohl beim Stapeln als auch beim Entstapeln ausgeschlossen ist. Die obere Zwischenlage einer ortsfesten Stapellage dient dabei jeweils als Gleitfläche für die untere zu transportierende, die Stapel tragende Zwischenlage.

Ein Ausführungsbeispiel der Vorrichtung zum Be- und Entladen von Paletten mit Stapeln von Druckereierzeugnissen wird nachfolgend anhand der Zeichnungen näher erläutert. Es zeigen:

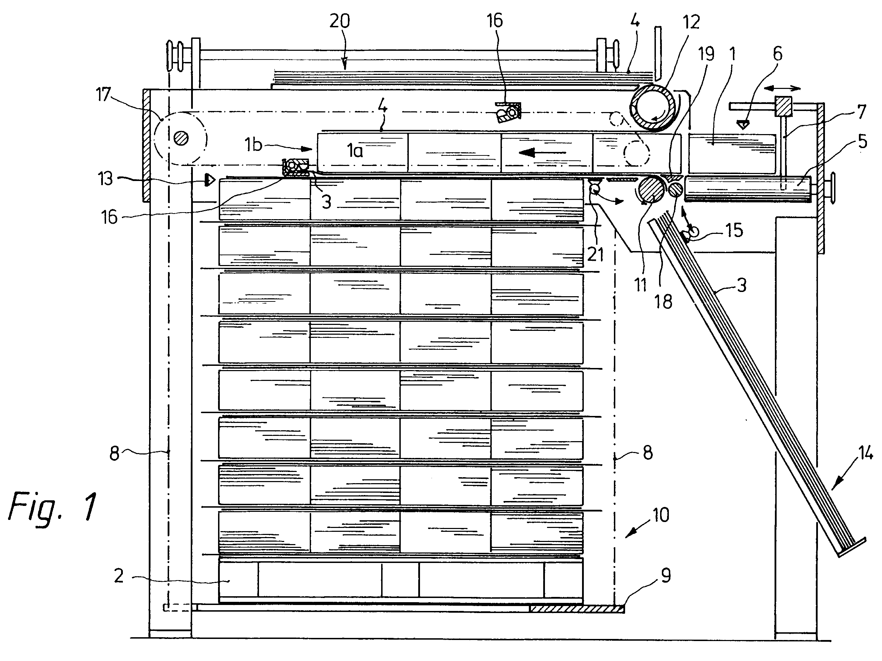

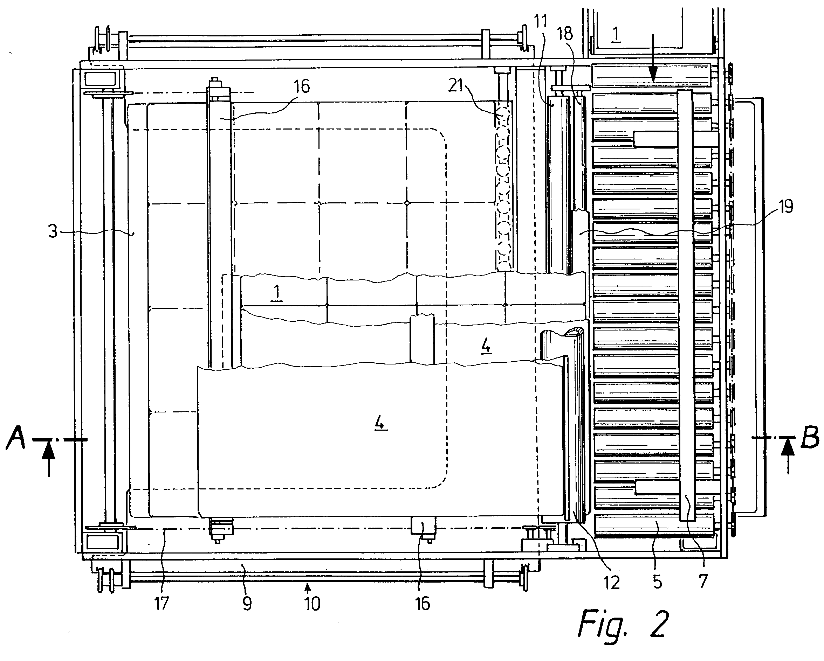

- Fig. 1: eine Seitenansicht der Vorrichtung zum Beladen gemäß der Linie A-B in Figur 2;
- Fig. 2: eine Draufsicht auf die Vorrichtung;

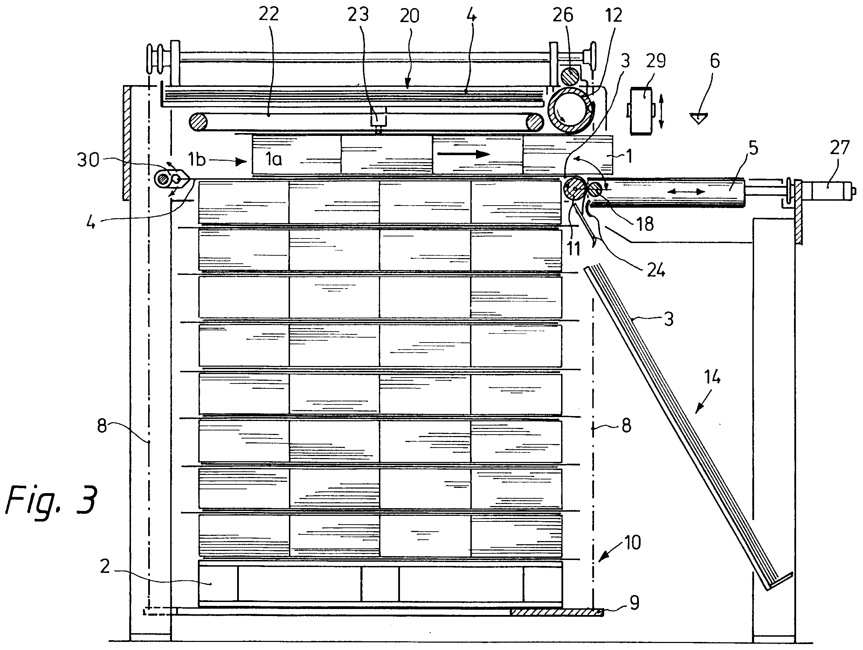

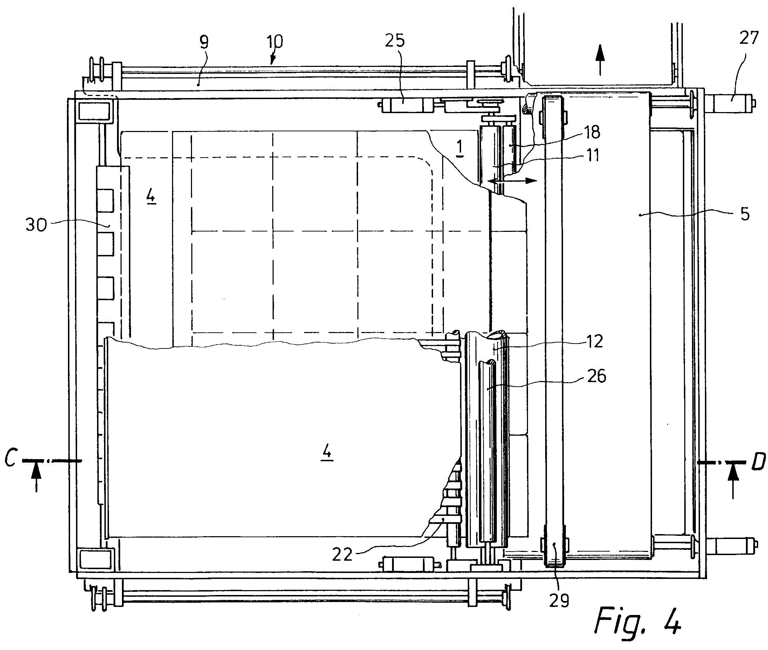

- Fig. 3: eine Seitenansicht der Vorrichtung zum Entladen im Schnitt gemäß der Linie C-D in Figur 4;
- Fig. 4: eine Draufsicht auf die Vorrichtung.

Zum fortlaufenden lagenweisen Beladen von Paletten 2 mit Stapeln 1 von beispielsweise Falzbogen werden jeder Stapellage 1b gleichlaufend mit dem Zulauf von Stapelreihen 1a in die Stapelstelle biegsame Kartonzwischenlagen 3 und 4 von unten und oben zugeführt, wobei die obere Zwischenlage 4 einer zuvor gestapelten Stapellage 1b jeweils als Gleitfläche für eine nachfolgend zu stapelnde Stapellage 1b dient.

Die einzelnen Stapel 1 werden über einen Einlaufförderer 5 zugeführt und bei Erreichen einer durch eine Lichtschranke 6 vorgegebenen Endposition wird der Förderer 5 angehalten. Mittels einer gemäß Pfeilrichtung verfahrbaren Abschubeinrichtung 7 erfolgt ein reihenweises Abschieben der Stapel 1 in Querrichtung.

Die zu beladende Palette 2 befindet sich auf einer an Ketten 8 aufgehängten Tragplatte 9 einer in der Vertikalebene verfahrbaren Hubeinrichtung 10.

Zwischen der Stapelstelle in der Hubeinrichtung 10 und dem Einlaufförderer 5 ist ein Transportwalzensystem vorgesehen, bestehend aus einer unteren Walze 11 und einer oberen Walze 12, die von einem gemeinsamen Motor drehangetrieben sind. Entsprechend der Höhe der Falzbogenstapel läßt sich die obere Walze 12 über nicht dargestellte Mittel höhenverstellen.

Gleichzeitig mit der Stapelzufuhr auf dem Einlaufförderer 5 wird eine untere Zwischenlage 3 durch Sauger 15 aus einem Magazin 14 vereinzelt und durch die untere angetriebene Walze 11 mit einer Gegendruckwalze 18 sowie durch ein Leitblech 19 soweit nach oben in die Zufuhrebene der Stapel 1 geschoben, daß eine Greiferleiste 16 eines über der Stapelstelle installierten in horizontaler Ebene laufenden, mit den Walzen 11 und 12 synchron angetriebenen Kettensystems 17 die Vorderkante der Zwischenlage 3 fassen kann.

Oberhalb des Kettensystems 17 befindet sich ein weiteres Magazin 20 mit oberen Zwischenlagen 4, die von der als Saugwalze ausgebildeten oberen Walze 12 vereinzelt und der Stapellage 1b von oben zugeführt werden.

Während die Vorderkante der vereinzelten unteren Zwischenlage 3 mit einem das Erfassen durch die Greiferleiste 16 ermöglichenden überstand zur Stapelreihe 1a einläuft, gelangt die Vorderkante der vereinzelten oberen Zwischenlage 4 mit der Vorderkante der Stapelreihe 1a gleichzeitig zwischen die Walzen 11 und 12, so daß sich die obere Zwischenlage 4 mit einem hinteren überstand auf der Stapellage 1b befindet.

Das Abschieben der Stapelreihen 1a von dem Einlaufförderer 5 durch die Abschubeinrichtung 7 zwischen die Walzen 11 und 12, das Zuführen der Kartonzwischenlagen 3 und 4 zu den Stapelreihen 1a von unten - vorzugsweise um einen engen Radius - und von oben erfolgt zeitlich aufeinander abgestimmt von einem gemeinsamen Antriebsmotor aus. Ein Stillstand des Antriebs tritt jeweils bei Zufuhr einer neuen Stapelreihe 1a auf. Die Stapelreihen 1a werden somit nacheinander auf die untere Kartonzwischenlage 3 geschoben und von der oberen Kartonzwischenlage 4 abgedeckt, wobei die Greiferleiste 16 die untere Kartonzwischenlage 3 synchron mit den einlaufenden Stapelreihen 1a vorzieht.

Um ein Mitreißen der oberen Zwischenlage 4 einer zuvor gebildeten Stapellage 1b beim Zuführen einer folgenden Stapellage 1b auszuschließen, wird die obere Zwischenlage 4 an dem hinteren überstand mittels einer Saugerreihe 21 in Position gehalten. Anstelle der Saugerreihe 21 kann eine Greifleiste oder Greiferleiste zum Einsatz gelangen.

Die Saugerreihe 21 läßt sich seitwärts aus der vertikalen Bewegungsebene der oberen Kartonzwischenlage 4 gemäß Pfeilrichtung verfahren.

Nachdem alle Stapelreihen 1a einer Stapellage 1b der Stapelstelle über der Palette 2 zugeführt sind, öffnet die sich nun in ihrer Endstellung befinden de Greiferleiste 16 und das Kettensystem 17 hält an, bis eine neue Stapelreihe 1a einer folgenden Stapellage 1b zugeführt ist, was eine Lichtschranke 6 meldet, und bis die Palette 2 von der Hubeinrichtung 10 soweit abgesenkt ist, daß eine Lichtschranke 13 freigegeben wird.

Nach Absenken der Palette 2 erfaßt die von der Seite wieder in Position zurückgefahrene Saugerreihe 21 die soeben aufgebrachte obere Zwischenlage 4, die zweite Greiferleiste 16 des Kettensystems 17 übernimmt eine vereinzelte untere Zwischenlage 3 und das Zuführen der nächsten Stapellage 1b gleichlaufend mit den vereinzelten unteren und oberen Zwischenlagen 3 und 4 beginnt.

Nach Stapeln aller Stapellagen 1b einer Palette 2 erfolgt ein Palettenwechsel, während eine Stapelreihe 1a einer folgenden Stapellage 1b auf den Förderer 5 läuft. Eine leere Palette wird in die Hubeinrichtung 10 verbracht und in die obere Stapelposition gefahren, bis die Oberkante der Palette die Lichtschranke 13 abdeckt.

Zwecks Reduzierung der Stillstandszeit beim Palettenwechsel kann die Leerpalette auch in der oberen Position auf einer nicht dargestellten Führung eingeschoben werden.

Zum fortlaufenden lagenweisen Entladen von Paletten 2 mit Stapeln 1 von beispielsweise Falzbogen mit doppelten Kartonzwischenlagen 3 und 4 zwischen jeweils zwei Stapellagen 1b werden die untere Zwischenlage 3 und die obere Zwischenlage 4 gleichlaufend mit dem Ablaufen der Stapelreihen 1a von der Stapelstelle nach unten und oben weggeführt, wobei die obere Zwischenlage 4 einer nachfolgenden Stapellage 1b jeweils als Gleitfläche für die zu entstapelnde Stapellage 1b dient.

Die beladene Palette 2 wird von der Hubeinrichtung 10 angehoben bis die obere Stapellage 1a gegen umlaufende mit den mit der wegzuführenden Stapelreihe 1a synchron angetriebene Niederhaltebänder 22 mit einem Kontaktschalter 23 fährt.

Durch die untere Transportwalze 11 mit der schwenkbaren Gegendruckwalze 18 wird nun der überstehende Teil der unteren Zwischenlage 3 erfaßt, wobei sich die Gegendruckwalze 18 in der Position über der Walze 11 befindet. Nach übernahme der Zwischenlage 3 schwenkt die Gegendruckwalze 18 in die waagerechte Stellung. Dabei wird die Schwenkbewegung der Walze 18 durch einen Freilauf in Sperrichtung auf die Drehbewegung der Walze 11 übertragen und die Zwischenlage 3 mit der sich darauf befindenden Stapellage 1b soweit vorgezogen, daß die erste Stapelreihe 1a zwischen die Walzen 11 und 12 gelangt. Die obere als Saugwalze ausgebildete Walze 12 saugt die obere Zwischenlage 4 an und führt diese unter eine mit der Saugwalze 12 in Wirkverbindung stehende Andrückwalze 26, gleichlaufend mit dem Vortransport der Stapelreihen 1a. Ebenso wird die untere Zwischenlage 3 gleichlaufend mit dem Vortransport der Stapelreihen 1a über die Walze 11 mit Gegendruckwalze 18, geführt von Leitblechen 24, in das Magazin 14 transportiert. Die Stapel 1 sind durch die obere und untere Zwischenlage 3 und 4 zwangsgeführt und bedingt durch das Einspannen ist ein verrutschfreies Entstapeln sichergestellt. Die Niederhaltebänder 22 drücken dabei auf die zu entstapelnden Stapelreihen 1a und halten somit auch leicht verrutschende Produkte beim Transport zusammen.

Der Vortransport jeder Stapelreihe 1a durch die Walzen 11 und 12 erfolgt solange bis die Lichtschranke 6 bedeckt wird; die Reihe befindet sich dann auf dem Förderer 5 zum Herausführen der Stapelreihe 1a. Um einen Zwischenraum zwischen der herauszuführenden Stapelreihe 1a und einer folgenden zu erhalten, wird der Förderer 5 über Zylinder 27 seitwärts verschoben. Nach erfolgtem Ausfuhrtransport und Freigabe der Lichtschranke 6 wird der Förderer 5 bis unmittelbar vor die untere Walze 11 wieder zurückgefahren.

Über dem Förderer 5 befindet sich ein synchron mit diesem angetriebenes Oberband 29 mit der Aufgabe, die entstapelte Stapelreihe 1a beim Ausfuhrtransport am Verrutschen zu hindern. Das Oberband 29 lüftet durch nicht dargestellte Mittel beim Abziehen der Stapelreihe 1a von der Stapelstelle und legt sich beim Ausfuhrtransport federnd auf die Stapel 1. Nach erfolgtem Ausfuhrtransport wird eine folgende Stapelreihe 1a abgezogen bis die Lichtschranke 6 wieder bedeckt ist.

Um beim Abziehen der unteren Zwischenlage 3 ein Mitreißen der als Gleitfläche dienenden oberen Zwischenlage 4 einer unteren Stapellage 1b auszuschließen sind in einer Reihe angeordnete, über nicht dargestellte Steuermittel gemäß Pfeilrichtung öffnende und schließende Haltezangen 30 vorgesehen, die den überstand der oberen Zwischenlage 4 erfassen und diese somit in Position halten. Alternativ kann die Haltezange 30 durch eine Saugleiste ersetzt werden.

Nach Entstapeln einer Stapellage 1b erfolgt ein Palettenhub bis eine folgende Stapellage 1b gegen die Niederhaltebänder 22 mit dem Kontaktschalter 23 drückt, zuvor öffnen die Haltezangen 30 und geben die obere Zwischenlage 4 frei.

Parallel zur seitlichen Verschiebung des Förderers 5 erfolgt ein Seitwärtsverschieben der unteren Walze 11 und der Gegendruckwalze 18 des Transportsystems, was über einen Pneumatikzylinder 25 ausführbar ist. Durch das seitliche Verschieben kann eine folgende untere Zwischenlage 3 mit ihrem Überstand passieren, bevor dieser nach erfolgtem Ausfuhrtransport und Palettenhub von den Walzen 11 und 18 erfaßt wird und das Abziehen einer nachfolgenden Stapellage 1b beginnt.

Nach Entfernen der letzten Stapellage 1b fährt die leere Palette 2 in der Hubeinrichtung 10 in ihre untere Endstellung. Die Leerpalette wird entfernt und eine beladene Palette 2 zugeführt.

Um die Stillstandzeit bei Stapelwechsel zu reduzieren, kann die volle Palette schon während des Verarbeitens der letzten Lage zugeführt werden. Dazu wird die nur noch eine Lage enthaltende Palette in der obersten Position durch nicht dargestellte Mittel festgehalten, so daß die Hubplatte 9 absenken kann. Die Leerpalette wird in der obersten Position herausgezogen.

## Patentansprüche

1. Verfahren zum fortlaufenden lagenweisen Be- und Entladen von Paletten mit Stapeln von flächigen Produkten wie Falzbogen, Zeitschriften, Bücher, Broschuren o. dgl., wobei zum Beladen einer Palette (2) die in Stapelreihen (1a) zugeführten Stapel (1) auf eine gleichlaufend mit dem Zulauf der Stapelreihen (1a) in die Stapelstelle von unten zugeführte biegsame Zwischenlage (3) gebracht bzw. zum Entladen der Palette (2) von der gleichlaufend mit dem Ablauf der Stapelreihen (1a) von der Stapelstelle nach unten weggeführten Zwischenlage (3) entfernt werden, wobei die Zwischenlage (3) auf einer die untere Stapellage (1b) abdeckenden, zuvor aufgebrachten und in Position gehaltenen Zwischenlage (4) gleitet.

2. Verfahren nach Anspruch 1, dadurch gekennzeichnet, daß zum Beladen gleichlaufend mit dem Zulauf der Stapelreihen (1a) in die Stapelstelle eine Zwischenlage (4) von oben zugeführt bzw. zum Entladen die Zwischenlage (4) gleichlaufend mit dem Ablauf der Stapelreihe (1a) von der Stapelstelle nach oben weggeführt wird.

3. Verfahren nach Anspruch 1 oder 2, dadurch gekennzeichnet, daß jeweils die untere Zwischenlage (3) einer Stapellage (1b) an überständen gleichlaufend mit dem Transport der Stapelreihen (1a) in die Stapelstelle gezogen und die angrenzende obere Zwischenlage (4) an überständen in Position gehalten wird.

4. Verfahren nach Anspruch 1 bis 3, dadurch gekennzeichnet, daß die untere Zwischenlage (3) um einen engen Radius den Stapelreihen (1a) zugeführt bzw. von diesen weggeführt wird.

5. Verfahren nach Anspruch 1 bis 4, dadurch gekennzeichnet, daß die Stapel (1) während ihres Zulaufs und Ablaufs in den Zwischenlagen (3, 4) geklemmt gehalten werden.

6. Verfahren nach Anspruch 1 bis 5, dadurch gekennzeichnet, daß zum Beladen die Zwischenlagen (3, 4) den Stapelreihen (1a) aus Magazinen (14, 20) zugeführt bzw. zum Entladen in die Magazine (14, 20) zurücktransportiert werden.

7. Vorrichtung zur Durchführung des Verfahrens zum Beladen einer Palette mit Stapeln nach Anspruch 1 bis 6, bestehend aus einer in Vertikalebene verfahrbaren Palettenhubeinrichtung (10) mit einem Einlaufförderer (5), aus einer unteren und oberen Transportwalze (11, 12) zwischen Einlaufförderer (5) und der Stapelstelle in der Palettenhubeinrichtung (10) zum Einspannen und Vorschieben der Stapelreihen (1a) zu der Stapelstelle zusammen mit über Fördermittel (11, 18 und 12) von unten und oben um die Transportwalzen (11, 12) herum aus Magazinen (14, 20) zugeführten Zwischenlagen (3, 4), aus Fördermitteln (7) zum Vorschieben der Stapelreihen (1a) vom Einlaufförderer (5) zwischen die Transportwalzen (11, 12), aus die untere Zwischenlage (3) an dem überstand erfassenden, mit den zulaufenden Stapelreihen (1a) synchron angetriebenen und diese in den Wirkbereich der Transportwalzen (11, 12) vorziehenden Zugmitteln (16) und aus die obere Zwischenlage (4) einer zuvor gestapelten Stapellage (1b) an dem Überstand erfassenden Rückhaltemitteln (21).

8. Vorrichtung zur Durchführung des Verfahrens zum Entladen einer Palette mit Stapeln nach Anspruch 1 bis 6, bestehend aus einer in Vertikalebene verfahrbaren Palettenhubeinrichtung (10) mit einem Ausfuhrförderer (5), aus einer unteren und oberen Transportwalze (11, 12) zwischen Ausfuhrförderer (5) und der Entstapelstelle in der Palettenhubeinrichtung (10) zum Einspannen und Fördern der Stapelreihen (1a) zusammen mit der unteren und oberen Zwischenlage (3, 4) aus der Stapelstelle, aus die untere Zwischenlage (3) an dem überstand erfassenden, mit den heraus laufenden Stapelreihen (1a) synchron angetriebenen und diese in den Wirkbereich der Transportwalzen (11, 12) ziehenden sowie die untere Zwischenlage um die untere Transportwalze herum nach unten in ein Magazin (14) fördernden Zugmitteln (11, 18), aus die obere Zwischenlage (4) von der Stapellage (1b) um die obere Transportwalze (12) herum nach oben in ein Magazin (20) fördernden Transportmitteln (12, 26) und aus die obere Zwischenlage (4) einer zuvor gestapelten Stapellage (1b) an dem überstand erfassenden Rückhaltemitteln (30).

9. Vorrichtung nach Anspruch 7, dadurch gekennzeichnet, daß die Fördermittel zum Zuführen der unteren Zwischenlage (3) von der angetriebenen Walze (11) und einer Gegendruckwalze (18) und die Fördermittel zum Zuführen der oberen Zwischenlage (4) von einer Saugwalze (12) gebildet sind.

10. Vorrichtung nach Anspruch 7 oder 9, dadurch gekennzeichnet, daß die Zugmittel aus Greiferleisten (16) eines über der Stapelstelle installierten in horizontaler Ebene angetriebenen Kettensystem (17) bestehen.

11. Vorrichtung nach Anspruch 8, dadurch gekennzeichnet, daß die Zugmittel von der Walze (11) und der Gegendruckwalze (18) gebildet sind, die um die Achse der Walze (11) aus einer Position über der Walze (11) in eine Position neben der Walze (11) schwenkbar ist, wobei die Schwenkbewegung durch einen Freilauf in Sperrichtung auf die Drehbewegung der Walze (11) übertragbar ist.

12. Vorrichtung nach Anspruch 7 bis 11, gekennzeichnet durch ein beim Vortransport auf die Stapelreihen (1a) drückendes Niederhalteelement (22).

13. Vorrichtung nach Anspruch 12, dadurch gekennzeichnet, daß das Niederhalteelement (22) von mit dem Vortransport der Stapelreihen (1a) synchron angetriebenen Bändern gebildet ist.

14. Palette mit lagenweise gestapelten flächigen Produkten wie Falzbogen, Zeitschriften, Büchern, Broschuren o. dgl. beladen unter Anwendung des Verfahrens nach Anspruch 1, wobei sich zwischen den Stapel lagen (1b) je zwei Zwischenlagen (3, 4) mit ein getrenntes Erfassen ermöglichenden Überständen befinden.

## Claims

1. A method of palletizing and depalletizing stacks of products in continuous, layer by layer succession, the products in question being substantially flat and thin, such as folded sheets of paper, periodicals, books, brochures or the like, wherein, in order to load a pallet (2), the stacks (1),
supplied in stack rows (1a), are brought onto a flexible interleaf (3) which is fed in from below in synchronism with the incoming movement of the stack rows (1a) to the stacking location, or else, in order to unload the pallet (2), they are removed from the interleaf (3) which is guided away downwards in synchronism with the outgoing movement of the stack rows (1a) from the stack location, the interleaf (3) sliding on an interleaf (4) which has previously been placed on the stack layer (1b) beneath and is held in position, covering it.

2. The method as claimed in claim 1, wherein, in order to carry out a loading operation, an interleaf (4) is fed in from above in synchronism with the incoming movement of the stack rows (1a) to the stacking location, or else, in order to carry out an unloading operation, the interleaf (4) is guided away upwards in synchronism with the outgoing movement of the stack row (1a) from the stack location.

3. The method as claimed in claim 1 or claim 2, wherein the lower interleaf (3) associated with each stack layer (1b) is pulled, at a projecting portion, to the stacking location in synchronism with the transport of the stack rows (1a) thereto, and the adjacent upper interleaf (4) is held, at a projecting portion, to keep it in position.

4. The method as claimed in any of claims 1 to 3, wherein the lower interleaf (3) is guided around a tight radius on being fed in to the stack rows (1a), or on being guided away therefrom.

5. The method as claimed in any of claims 1 to 4, wherein the stacks (1) are held in the interleaves (3, 4) in a clamped state while they are moving in and moving out.

6. The method as claimed in any of claims 1 to 5, wherein, in order to carry out a loading operation, the interleaves (3, 4) are fed to the stack rows (1a) from magazines (14, 20) or, in order to carry out an unloading operation, they are transported back into the magazines (14, 20).

7. An apparatus utilizing the stack-palletizing method as claimed in any of claims 1 to 6, existing of pallet-lifting device (10) which can be caused to move in a vertical plane is associated with a run-in conveyor (5), of a lower transport roller (11) and an upper transport roller (12), between the run-in conveyor (5) and the stacking location in the pallet-lifting device (10), serve to clamp the stack rows (1a) and to feed them forwards to the stacking location together with interleaves (3, 4) which, through the agency of conveying means (11, 18 and 12), are fed in from magazines (14, 20), from below and from above, around the transport rollers (11, 12), of conveying means (7) serve to push the stack rows (1a) forwards from the run-in conveyor (5) and between the transport rollers (11, 12), of pulling means (16), driven in synchronism with the incoming stack rows (1a), grasp the lower interleaf (3) at the projecting portion and pull these stack rows (1a) forwards into the region where the transport rollers (11, 12) are functionally effective, and of hold-back means (21) grasp the upper interleaf (4) associated with a previously stacked stack layer (1b) at the projecting portion.

8. An apparatus utilizing the stack-depalletizing method as claimed in any of claims 1 to 6, existing of a pallet-lifting device (10) which can be caused to move in a vertical plane is associated with a run-out conveyor (5), of a lower transport roller (11) and an upper transport roller (12), between the run-out conveyor (5) and the destacking location in the pallet-lifting device (10), serve to clamp the stack rows (1a) and to convey them from the stack location together with the lower and upper interleaves (3, 4), of pulling means (11, 18), driven in synchronism with the outgoing stack rows (1a), grasp the lower interleaf (3) at the projecting portion and pull these stack rows (1a) into the region where the transport rollers (11, 12) are effective, as well as conveying the lower interleaf around the lower transport roller and downwards into a magazine (14), of transport means (12, 26) convey the upper interleaf (4) away from the stack layer (1b), around the upper transport roller (12) and upwards into a magazine (20), and of hold-back means (30) grasp the upper interleaf (4) associated with a previously stacked stack layer (1b) at the projecting portion.

9. The apparatus as claimed in claim 7, wherein the conveying means for infeeding the lower interleaf (3) consist of the driven roller (11) and a counter-pressure roller (18), and the conveying means for infeeding the upper interleaf (4) consist of a suction roller (12).

10. The apparatus as claimed in claims 7 or 9, wherein the pulling means consist of gripper rails (16) which are associated with a chain system (17) installed above the stacking location and driven so as to move in a horizontal plane.

11. The apparatus as claimed in claim 8, wherein the pulling means consist of the roller (11) and the counter-pressure roller (18), which roller (18) can be swung, about the axis of the roller (11), from a position above said roller (11) to a position level with it, the swinging movement being transmissible to the rotation of the roller (11) through the agency of a freewheel mechanism rotating in its engaged rotation direction.

12. The apparatus as claimed in any of claims 7 to 11, wherein a hold-down element (22) exerts pressure on the stack rows (1a) while they are being transported forwards.

13. The apparatus as claimed in claim 12, wherein the hold-down element (22) consists of belts which are driven in synchronism with the forward transport of the stack rows (1a).

14. Pallet carrying products which are substantially flat and thin, stacked in layer by layer succession, such as folded sheets of paper, periodicals, books, brochures or the like, loaded by using the method as claimed in claim 1, wherein two interleaves (3, 4) are positioned between all successive stack layers (1b) and have projecting portions which enable each interleaf to be grasped individually.

## Revendications

1. Procédé de chargement et de déchargement continu par couches de piles de produits plats, tels que des feuilles pliées, revues, livres, brochures ou produits similaires, sur/de palettes, où pour charger la palette (2), des piles (1) amenées en rangées sont déposées sur une couche intermédiaire souple (3) amenée depuis le bas de manière synchrone à l'amenée des rangées de piles (1a) vers la station d'empilement, où pour décharger la palette (2), les piles (1) sont dégagées de la couche intermédiaire (3) elle-même dégagée vers le bas de manière synchrone au dégagement des rangées de piles (1a) de la station d'empilement, et où la couche intermédiaire (3) glisse sur une couche intermédiaire (4) recouvrant la couche de piles (1b) inférieure déposée auparavant et maintenue en place.

2. Procédé selon la revendication 1 *caractérisé en ce que* en vue du chargement, une couche intermédiaire (4) est amenée depuis haut de manière synchrone à l'amenée des rangées de piles (1a) et *en ce que* en vue du déchargement, la couche intermédiaire (4) est dégagée vers le haut de manière synchrone au dégagement des rangées de piles (1a).

3. Procédé selon les revendications 1 ou 2 *caractérisé en ce que* la couche intermédiaire inférieure (3) d'une couche de piles (1b) est tirée par ses extrémités saillantes dans la station d'empilement de manière synchrone au transport des rangées de piles (1a), la couche intermédiaire supérieure (4) contiguë étant maintenue en place par ses extrémités saillantes.

4. Procédé selon les revendications 1 ou 3 *caractérisé en ce que* la couche intermédiaire inférieure (3) est amenée vers les rangées de piles (1a) ou dégagée de celles-ci autour d'un élément à petit rayon.

5. Procédé selon les revendications 1 à 4 *caractérisé en ce que* les piles (1) sont maintenues enserrées par les couches intermédiaires (3), (4) pendant leur amenée et leur dégagement.

6. Procédé selon les revendications 1 à 5 *caractérisé en ce que* les couches intermédiaires (3), (4) sont acheminées, en vue du chargement, vers les rangées de piles (1a) à partir de dépôts (14), (20) et retournées vers les dépôts (14), (20) en vue du déchargement.

7. Dispositif pour la mise en oeuvre du procédé de chargement de piles sur une palette conforme aux revendications 1 à 6, qui se compose de:
- un mécanisme élévateur (10) déplaçable dans un plan vertical et pourvu d'un transporteur d'alimentation (5),
- un cylindre transporteur inférieur (11) et d'un cylindre transporteur supérieur (12) qui sont disposés dans le mécanisme élévateur (10) entre le transporteur d'alimentation (5) et la station d'empilement, qui permettent le serrage et l'acheminement des rangées de piles (1a) vers la station d'empilement simultanément à l'acheminement des couches intermédiaires (3), (4) amenées par des moyens transporteurs (11), (18) et (12) du bas et du haut à partir de dépôts (14), (20) en étant conduites autour de cylindres transporteurs (11), (12),
- de moyens transporteurs (7) pour l'avancement des rangées de piles (1a) depuis le transporteur d'alimentation (5) jusqu'entre les cylindres transporteurs (11) et (12),
- de moyens de traction (16) saisissant l'extrémité saillante de la couche intermédiaire inférieure (3), entraînés de manière synchrone aux rangées de piles (1a) arrivantes et tirant ladite couche intermédiaire inférieure (3) dans la zone de travail des cylindres transporteurs (11) et (12),
- de moyens de retenue (21) pour maintenir en place, par ses extrémités saillantes, la couche intermédiaire supérieure (4) d'une couche de pile (1b) déposée auparavant.

8. Dispositif pour la mise en oeuvre du procédé de déchargement de piles d'une palette conforme aux revendications 1 à 6 qui se compose de:
- un mécanisme élévateur (10) déplaçable dans un plan vertical et pourvu d'un transporteur d'évacuation (5),
- un cylindre transporteur inférieur (11) et un cylindre transporteur supérieur (12) qui sont disposés dans le mécanisme élévateur (10) entre le transporteur d'évacuation (5) et la station de déchargement, qui permettent le serrage et l'acheminement des rangées de piles (1a) simultanément au dégagement des couches intermédiaires inférieure (3) et supérieure (4) de ladite station d'empilement,
- moyens de traction (11), (18) saisissant l'extrémité saillante de la couche intermédiaire inférieure (3), entraînés de manière synchrone aux rangées de piles (1a) partantes, tirant la couche intermédiaire inférieure (3) dans la zone de travail des cylindres transporteurs (11), (12) et l'acheminant autour du cylindre transporteur inférieur vers le bas jusqu'au dépôt (14),
- moyens transporteurs (12), (26) acheminant la couche intermédiaire supérieure (4) de la couche de piles (1b) autour du cylindre transporteur supérieur (12) vers le haut jusqu'au dépôt (20),
- moyens de retenue (30) pour maintenir par ses extrémités saillantes la couche intermédiaire supérieure (4) d'une couche de piles (1b) déposée auparavant.

9. Dispositif selon la revendication 7 *caractérisé en ce que* les moyens transporteurs pour amener la couche intermédiaire inférieure (3) sont constitués du cylindre entraîné (11) et d'un cylindre de contre-pression (18), les moyens transporteurs pour acheminer la couche intermédiaire supérieure (4) étant constitués d'un cylindre aspirant (12).

10. Dispositif selon les revendications 7 ou 9 *caractérisé en ce* que les moyens de traction sont constitués des baguettes preneuses (16) d'un dispositif à chaîne (17) installé dans un plan horizontal au-dessus de la station d'empilement.

11. Dispositif selon la revendication 8 *caractérisé en ce que* les moyens de traction sont constitués du cylindre (11) et du cylindre de contre-pression (18) qui peut pivoter autour de l'axe du cylindre (11) depuis une position au-dessus dudit cylindre (11) dans une position à côté du cylindre (11), le mouvement de pivotement pouvant être transmis au mouvement de rotation du cylindre (11) par une roue libre dans le sens du blocage.

12. Dispositif selon les revendications 7 à 11 *caractérisé par* un élément d'appui (22) exerçant une pression sur les rangées de piles (1a) pendant l'avancement.

13. Dispositif selon la revendication 12 *caractérisé en ce que* l'élément d'appui (22) est constitué de bandes entraînées de manière synchrone au mouvement d'avancement des rangées de piles (1a).

14. Palette avec des couches de produits plats tels que des feuilles pliées, revues, livres, brochures ou produits similaires, qui ont été empilés en utilisant le procédé conforme à la revendication 1, où entre les couches empilées (1b) sont disposées deux couches intermédiaires (3), (4) dont les extrémités saillantes permettent de les saisir séparément.
